# EUROPÄISCHE PATENTSCHRIFT

(11) **EP 3 230 133 B1**
(45) Veröffentlichungstag und Bekanntmachung des Hinweises auf die Patenterteilung: **20.03.2019**
(21) Anmeldenummer: 15793783.0
(22) Anmeldetag: 10.11.2015
(51) Int. Cl.: B60S 1/52

(54) **WISCHARMVORRICHTUNG MIT EINER WASCHWASSERDÜSE**
WIPERARM WITH WASHING FLUID NOZZLE
BRAS D'ESSUIE GLACE AVEC GICLEUR DE LIQUIDE DE LAVAGE

(30) Priorität: 10.12.2014 DE 102014225477
(43) Veröffentlichungstag der Anmeldung: 18.10.2017
(73) Patentinhaber: Robert Bosch GmbH, 70442 Stuttgart (DE)
(72) Erfinder: GOELLER, Alexander, 72270 Baiersbronn (DE); RAPP, Harald, 77815 Buehl (DE); BURKARD, Hermann, 76473 Iffezheim (DE); KRUSE, Michael, 76547 Sinzheim (DE); HORVATH, Zsofia, H-8175 Balatonfüzfo (HU)
(86) Internationale Anmeldenummer: PCT/EP2015/076131
(87) Internationale Veröffentlichungsnummer: WO 2016/091513

(56) Entgegenhaltungen:
- DE-A1-102013 208 576
- US-A- 6 094 772
- US-B1- 6 286 174

## Beschreibung

### Stand der Technik

Es ist bereits eine Wischarmvorrichtung mit einer Waschwasserdüse und mit einem Gelenkteil, das zumindest eine Befestigungslasche aufweist, die zu einer Befestigung der Waschwasserdüse an dem Gelenkteil vorgesehen ist, vorgeschlagen worden.

Eine Wischarmvorrichtung mit den Merkmalen des Oberbegriff ist aus der US 6,286,174 B1 bekannt. Weiterer Stand der Technik ist aus der US 6,094,772 A sowie aus der DE 10 2013 208 576 A1 bekannt.

### Offenbarung der Erfindung

Die Erfindung geht aus von einer Wischarmvorrichtung mit einer Waschwasserdüse und mit einem Gelenkteil, das zumindest eine Befestigungslasche aufweist, die zu einer Befestigung der Waschwasserdüse an dem Gelenkteil vorgesehen ist.

Es wird vorgeschlagen, dass die Wischarmvorrichtung eine Rasteinheit umfasst, die dazu vorgesehen ist, eine Rastverbindung zwischen der zumindest einen Befestigungslasche und der Waschwasserdüse herzustellen. Dadurch kann eine besonders schnelle und fehlerfreie Montage der Waschwasserdüse an dem Gelenkteil erfolgen. Unter einer "Waschwasserdüse" soll in diesem Zusammenhang insbesondere eine Düse verstanden werden, die dazu vorgesehen ist, Waschwasser auszubringen, beziehungsweise in eine bestimmte Richtung zu sprühen. Insbesondere weist die Waschwasserdüse zumindest eine Düsenöffnung auf, die ein Waschwassersystem zu einer Umgebung hin öffnet. Die Waschwasserdüse ist vorzugsweise aus einem Metall und/oder besonders vorteilhaft aus einem Kunststoff hergestellt. Bevorzugt ist die Waschwasserdüse dazu vorgesehen, mit einem Waschwasserschlauch gekoppelt zu werden.

Unter einem "Gelenkteil" soll in diesem Zusammenhang insbesondere ein Bauteil verstanden werden, das einen Hebelarm zwischen einer Antriebswelle und einem Wischarmadapter der Wischarmvorrichtung bildet. Vorzugsweise umfasst das Gelenkteil ein zumindest im Wesentlichen U-förmiges Profil. Weiterhin vorteilhaft ist das Gelenkteil von einer Metallstange, insbesondere von einer lackierten Metallstange gebildet. Vorteilhaft ist eine Wischstange mit dem Gelenkteil vercrimpt oder einstückig ausgebildet. Das Gelenkteil ist vorzugsweise gelenkig mit einem Befestigungsteil der Wischarmvorrichtung verbunden. Vorteilhaft ist das Befestigungsteil drehfest mit der Antriebswelle koppelbar ausgebildet.

Unter einer "Befestigungslasche" soll in diesem Zusammenhang insbesondere ein dünnwandiges Befestigungselement verstanden werden, das zu einer Befestigung mit der zumindest einen Waschwasserdüse vorgesehen ist. Unter "dünnwandig" soll in diesem Zusammenhang insbesondere mit einer Dicke von weniger als 8 mm, bevorzugt von weniger als 5 mm, besonders bevorzugt von weniger als 3 mm verstanden werden. Unter einer "Rasteinheit" soll in diesem Zusammenhang insbesondere eine Einheit verstanden werden, die zumindest ein Rastmittel aufweist, das dazu vorgesehen ist, während eines Montagevorgangs federelastisch aus einer Ausgangsposition ausgelenkt zu werden, und das sich bei Erreichen einer Endmontageposition federelastisch zumindest teilweise zurück in die Ausgangsposition bewegt. Bevorzugt umfasst die Rasteinheit zumindest eine mit dem zumindest einen Rastmittel korrespondierende Rastausnehmung. Unter "vorgesehen" soll insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

In der Erfindung wird vorgeschlagen, dass die Rasteinheit zumindest eine Rastausnehmung umfasst, die in der zumindest einen Befestigungslasche zur Aufnahme eines Rastmittels angeordnet ist. Dadurch kann eine besonders sichere Rastverbindung zwischen der Waschwasserdüse und dem Gelenkteil erzielt werden. Bevorzugt durchdringt die zumindest eine Rastausnehmung die zumindest eine Befestigungslasche vollständig. Unter einer "Rastausnehmung" soll in diesem Zusammenhang insbesondere eine Ausnehmung verstanden werden, die dazu vorgesehen ist, ein Rastmittel zur Herstellung einer Rastverbindung aufzunehmen.

In der Erfindung weist zumindest eine Rastausnehmung einen zumindest im Wesentlichen kreisrunden Querschnitt auf. Dadurch kann die Rastausnehmung besonders kostengünstig in die Befestigungslasche eingebracht werden. Bevorzugt ist die zumindest eine Rastausnehmung von einer Bohrung gebildet. Alternativ wird vorgeschlagen, dass die zumindest eine Rastausnehmung einen zumindest im Wesentlichen rechteckigen Querschnitt aufweist.

Weiterhin wird vorgeschlagen, dass die Waschwasserdüse zumindest ein Rastmittel umfasst, das dazu vorgesehen ist, bei einer Montage in die zumindest eine Rastausnehmung der Befestigungslasche einzurasten. Dadurch kann eine besonders zuverlässige Sicherung der Waschwasserdüse an der Befestigungslasche erreicht werden. Vorzugsweise ist das zumindest eine Rastmittel zumindest bereichsweise formkomplementär zur zumindest einen Rastausnehmung der Befestigungslasche ausgebildet. Das Rastmittel ist dazu vorgesehen, während eines Montagevorgangs federelastisch aus einer Ausgangsposition ausgelenkt zu werden. Das Rastmittel ist ferner dazu vorgesehen, nach einem Erreichen einer Montageposition zurück in die Ausgangsposition bewegt zu werden.

Des Weiteren wird vorgeschlagen, dass das Gelenkteil einen Flansch aufweist, an dem die zumindest eine Befestigungslasche angeordnet ist. Dadurch kann die Befestigungslasche besonders stabil ausgebildet werden. Vorzugsweise bildet das Gelenkteil mit dem Flansch, einem Steg sowie einem weiteren Flansch ein U-förmiges Profil aus. Insbesondere ist der Flansch von einer Wandung gebildet, die zumindest im Wesentlichen senkrecht zu einer Wischrichtung angeordnet ist. Unter "zumindest im Wesentlichen" soll in diesem Zusammenhang insbesondere eine Abweichung von weniger als 20°, bevorzugt von weniger als 10° und ganz besonders bevorzugt von weniger als 5° verstanden werden.

Zudem wird vorgeschlagen, dass die zumindest eine Befestigungslasche einstückig mit dem Gelenkteil ausgebildet ist. Dadurch können aufwändige form- und/oder kraftschlüssige Verbindungen zwischen der Befestigungslasche und dem Gelenkteil vorteilhaft vermieden werden. Vorzugsweise ist die zumindest eine Befestigungslasche einstückig mit dem Flansch des Gelenkteils ausgebildet. Unter "einstückig" soll insbesondere stoffschlüssig verbunden, wie beispielsweise durch einen Schweißprozess und/oder Klebeprozess usw., und besonders vorteilhaft angeformt verstanden werden, wie durch die Herstellung aus einem Guss, in einem Stanzprozess und/oder durch die Herstellung in einem Ein- oder Mehrkomponentenspritzverfahren.

Ferner wird vorgeschlagen, dass die zumindest eine Befestigungslasche eine zumindest im Wesentlichen rechteckige Form aufweist. Dadurch kann die Befestigungslasche auf besonders einfache Weise Führungsflächen zu einer Führung und/oder Lagerung der Waschwasserdüse ausbilden. Vorzugsweise umfasst die Befestigungslasche zwei parallel zueinander verlaufende Führungsflächen zur Führung und/oder Lagerung der Waschwasserdüse.

Weiterhin wird vorgeschlagen, dass die zumindest eine Befestigungslasche zu einem Aufnahmeende hin verjüngt ausgebildet ist. Dadurch kann mit geringem Aufwand eine Montagehilfe zur vereinfachten Montage der Waschwasserdüse an der zumindest einen Befestigungslasche erreicht werden. Vorzugsweise ist zumindest eine Ecke der zumindest eine Befestigungslasche an dem Aufnahmeende abgekantet und/oder abgerundet ausgebildet. Vorzugsweise bildet die zumindest eine Befestigungslasche zumindest eine Montagehilfsfläche aus. Die zumindest eine Montagehilfsfläche grenzt vorzugsweise an die zumindest eine Führungsfläche an. Weiterhin vorteilhaft schließt die zumindest eine Montagehilfsfläche mit der zumindest einen Führungsfläche einen Winkel von zumindest im Wesentlichen 145° ein.

Des Weiteren wird vorgeschlagen, dass die zumindest eine Befestigungslasche in einem Wischblattinnenkreisbereich des Gelenkteils angeordnet ist. Dadurch kann eine besonders effiziente Auftragung von Waschwasser auf eine Fahrzeugscheibe erreicht werden. Der "Wischblattinnenkreisbereich" soll in diesem Zusammenhang insbesondere als ein Bereich des Gelenkteils verstanden werden, in dem in einem montierten Zustand der Wischarmvorrichtung mit einem Wischblatt eine innere Endkappe des Wischblatts angeordnet ist. Insbesondere weist der Wischblattinnenkreisbereich eine kugelförmige Erstreckung mit einem Kugeldurchmesser von 10 cm auf.

Zudem wird ein Verfahren zur Montage einer Wischarmvorrichtung vorgeschlagen, wobei eine Waschwasserdüse mit zumindest einer Befestigungslasche eines Gelenkteils durch eine Rasteinheit verrastet wird. Dadurch kann eine Montage der Waschwasserdüse an der zumindest einen Befestigungslasche besonders schnell und einfach erfolgen.

Die erfindungsgemäße Wischarmvorrichtung soll hierbei nicht auf die oben beschriebene Anwendung und Ausführungsform beschränkt sein. Insbesondere kann die erfindungsgemäße Wischarmvorrichtung zu einer Erfüllung einer hierin beschriebenen Funktionsweise eine von einer hierin genannten Anzahl von einzelnen Elementen, Bauteilen und Einheiten abweichende Anzahl aufweisen.

### Zeichnung

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine erfindungsgemäße Wischarmvorrichtung und ein Wischblatt in einer Seitenansicht,
- Fig. 2: ein Gelenkteil der Wischarmvorrichtung in einer perspektivischen Detailansicht,
- Fig. 3: das Gelenkteil und eine Waschwasserdüse der Wischarmvorrichtung vor einer Montage in einer Seitenansicht und
- Fig. 4: das Gelenkteil und eine Waschwasserdüse der Wischarmvorrichtung nach einer Montage in einer Seitenansicht.

### Beschreibung des Ausführungsbeispiels

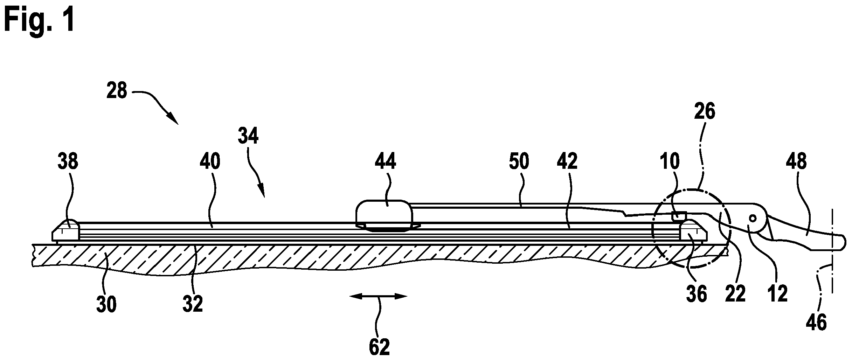

In der Figur 1 ist schematisch eine Wischarmvorrichtung mit einem Gelenkteil 12 und einem daran befestigten Wischblatt 28 dargestellt. Das Wischblatt 28 bildet ein Flachwischblatt aus. Das Wischblatt 28 ist zur Reinigung einer Fahrzeugscheibe 30 vorgesehen. Dazu weist das Wischblatt 28 eine Wischlippe 32 auf. Die Wischlippe 32 liegt in einem Wischbetrieb auf der Fahrzeugscheibe 30 auf. In einem Wischbetrieb streicht die Wischlippe 32 über die Fahrzeugscheibe 30, wodurch die Fahrzeugscheibe 30 gereinigt wird. Das Wischblatt 28 weist eine Windabweisereinheit 34 auf, die sich über einen Großteil einer Hauptlängserstreckung des Wischblatts 28 erstreckt. Das Wischblatt 28 weist eine innere Endkappe 36 und eine äußere Endkappe 38 auf. Die Endkappen 36, 38 schließen das Wischblatt 28 an Längsenden ab. Die Windabweisereinheit 34 weist zwei Windabweiserelemente 40, 42 auf. Zwischen den Windabweiserelementen 40, 42 ist ein Wischblattadapter 44 zur Kopplung mit einem nicht näher dargestellten Wischarmadapter der Wischarmvorrichtung angeordnet. Die Wischarmvorrichtung ist über den Wischarmadapter mit dem Wischblattadapter 44 des Wischblatts 28 lösbar gekoppelt.

Die innere Endkappe 36 ist an einem freien Ende des Wischblatts 28 angeordnet, das zumindest im Wesentlichen in Richtung einer Schwenkachse 46 ausgerichtet ist, um welche schwenkbar die Wischarmvorrichtung von einer nicht näher gezeigten Antriebswelle antreibbar ist. In einem Wischbetrieb bewegt sich die innere Endkappe 36 entlang eines Wischblattinnenkreises. Die innere Endkappe 36 ist in einem Wischblattinnenkreisbereich 26 des Gelenkteils 12 angeordnet. Der Wischblattinnenkreisbereich 26 weist einen Durchmesser von weniger als 10 cm auf. Die Wischarmvorrichtung weist ein Befestigungsteil 48 auf, das zu einer drehfesten Kopplung mit der Antriebswelle vorgesehen ist. Das Gelenkteil 12 ist gelenkig mit dem Befestigungsteil 48 verbunden. Die Wischarmvorrichtung umfasst eine Wischstange 50. Die Wischstange 50 ist einstückig mit dem Gelenkteil 12 ausgebildet. Es ist in diesem Zusammenhang jedoch auch denkbar, dass das Gelenkteil 12 mit der Wischstange 50 vercrimpt ausgebildet ist. Der nicht dargestellte Wischarmadapter ist üblicherweise mit dem Gelenkteil 12 vercrimpt oder einstückig mit dem Gelenkteil 12 ausgebildet. Das Gelenkteil 12 umfasst einen Querschnitt mit einem zumindest im Wesentlichen U-förmigen Profil. Das Gelenkteil 12 ist von einer lackierten Metallprofilstange gebildet.

Die Wischarmvorrichtung weist eine Waschwasserdüse 10 auf. Die Waschwasserdüse 10 ist dazu vorgesehen, Waschwasser auf die Fahrzeugscheibe 30 zu sprühen. Die Waschwasserdüse 10 ist an dem Gelenkteil 12 angeordnet. Die Waschwasserdüse 10 ist im Wischblattinnenkreisbereich 26 des Gelenkteils 12 angeordnet. Zur Befestigung der Waschwasserdüse 10 weist das Gelenkteil 12 eine Befestigungslasche 14 auf.

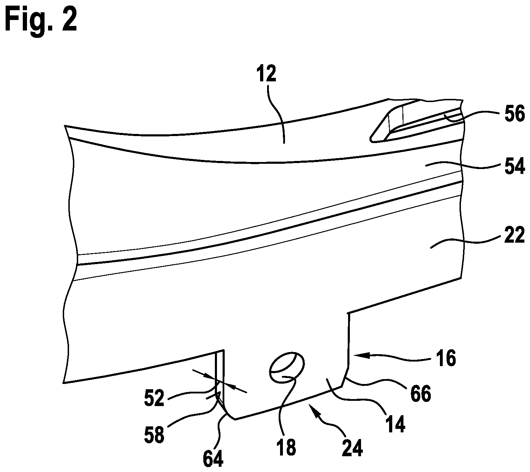

Die Befestigungslasche 14 ist in der Figur 2 näher dargestellt. Die Befestigungslasche 14 ist im Wischblattinnenkreisbereich 26 des Gelenkteils 12 angeordnet. Die Befestigungslasche 14 ist dünnwandig ausgebildet. Dabei weist die Befestigungslasche 14 eine Dicke 52 von weniger als 5 mm auf. Die Befestigungslasche 14 ist einstückig mit dem Gelenkteil 12 ausgebildet. Das Gelenkteil 12 weist einen Flansch 22 auf. Die Befestigungslasche 14 ist an dem Flansch 22 des Gelenkteils 12 angeordnet. Der Flansch 22 bildet zusammen mit einem Steg 54 und einem weiteren Flansch 56 ein U-förmiges Profil aus. Die Befestigungslasche 14 bildet einen Fortsatz des Flansches 22 aus. Die Befestigungslasche 14 erstreckt sich in einem betriebsbereiten Zustand der Wischarmvorrichtung von dem Gelenkteil 12 ausgehend in Richtung der Fahrzeugscheibe 30.

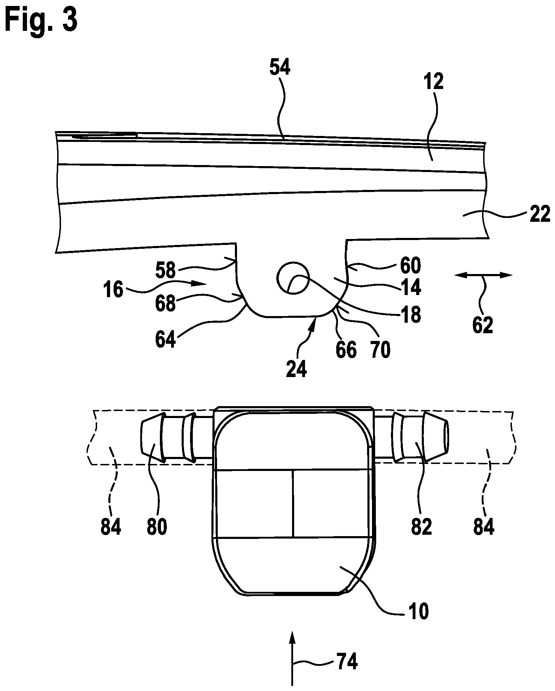

Wie auch in der Figur 3 gezeigt, weist die Befestigungslasche 14 eine im Wesentlichen rechteckige Form auf. Die Befestigungslasche 14 umfasst zwei parallel zueinander verlaufende Führungsflächen 58, 60 zur Führung und/oder Lagerung der Waschwasserdüse 10. Die Führungsflächen 58, 60 erstrecken sich senkrecht zu einer Gelenkteillängsrichtung 62. Die Gelenkteillängsrichtung 62 verläuft zumindest im Wesentlichen parallel zu einer maximalen Längserstreckungsrichtung des Gelenkteils 12.

Die Befestigungslasche 14 ist zu einem Aufnahmeende 24 hin verjüngt ausgebildet. Zwei Ecken 64, 66 der Befestigungslasche 14 sind am Aufnahmeende 24 abgerundet ausgebildet. Die Befestigungslasche 14 bildet zwei Montagehilfsflächen 68, 70 aus. Die Montagehilfsflächen 68, 70 grenzen an die Führungsflächen 58, 60 an. Die Montagehilfsflächen 68, 70 schließen mit den Führungsflächen 58, 60 jeweils einen Winkel 72 von 145° ein.

Die Wischarmvorrichtung umfasst eine Rasteinheit 16. Die Rasteinheit 16 ist dazu vorgesehen, eine Rastverbindung zwischen der Befestigungslasche 14 und der Waschwasserdüse 10 herzustellen. Die Rasteinheit 16 umfasst eine Rastausnehmung 18. Die Rastausnehmung 18 ist in der Befestigungslasche 14 zur Aufnahme eines Rastmittels 20 angeordnet. Die Rastausnehmung 18 durchdringt die Befestigungslasche 14 vollständig. Die Rastausnehmung 18 durchdringt die Befestigungslasche 14 in Wischrichtung. Die Rastausnehmung 18 weist einen kreisrunden Querschnitt auf. Es ist in diesem Zusammenhang auch denkbar, dass die Rastausnehmung 18 eine andere, einem Fachmann als sinnvoll erscheinende Querschnittsform aufweist, wie insbesondere eine rechteckige oder ovale Querschnittsform. Die Rastausnehmung 18 ist von einer Bohrung gebildet. Es ist in diesem Zusammenhang auch denkbar, dass die Rastausnehmung 18 auf eine andere, dem Fachmann als sinnvoll erscheinende Weise in die Befestigungslasche 14 eingebracht ist, wie beispielsweise durch einen Stanzvorgang.

Die Figur 3 zeigt die Waschwasserdüse 10 vor einer Montage an der Befestigungslasche 14. Die Waschwasserdüse 10 umfasst zwei Anbindungsmittel 80, 82 zu einer Anbindung eines Waschwasserschlauchs 84. Der Waschwasserschlauch 84 ist zur Versorgung der Waschwasserdüse 10 mit Waschwasser sowie zur teilweisen Weiterleitung des Waschwassers an eine weitere, nicht gezeigte Waschwasserdüse vorgesehen. Die Waschwasserdüse 10 wird bei einer Montage in eine Vertikalrichtung 74 auf die Befestigungslasche 14 aufgeschoben. Die Vertikalrichtung 74 verläuft senkrecht zur Wischrichtung und senkrecht zur Gelenkteillängsrichtung 62. Die Waschwasserdüse 10 wird mit der Befestigungslasche 14 des Gelenkteils 12 durch die Rasteinheit 16 verrastet.

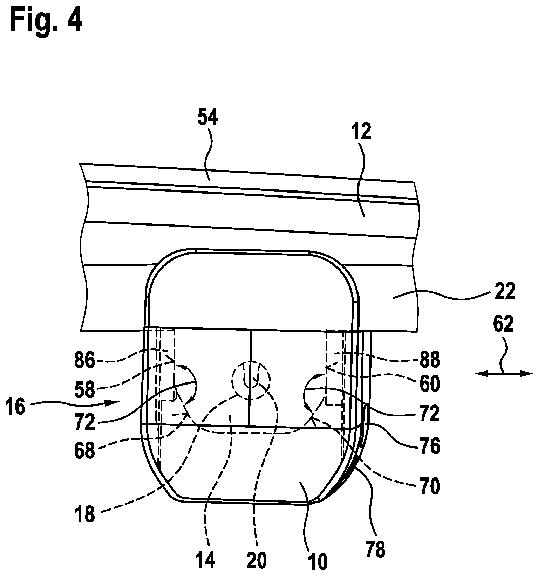

Wie in der Figur 4 gezeigt, umfasst die Waschwasserdüse 10 das Rastmittel 20. Das Rastmittel 20 ist dazu vorgesehen, bei einer Montage in die Rastausnehmung 18 der Befestigungslasche 14 einzurasten. Das Rastmittel 20 ist laschenförmig ausgebildet. Das Rastmittel 20 weist eine kleinere Abmessung auf als die Rastausnehmung 18. Es ist in diesem Zusammenhang auch denkbar, dass das Rastmittel 20 zumindest bereichsweise formkomplementär zur Rastausnehmung 18 der Befestigungslasche 14 ausgebildet ist. Die Waschwasserdüse 10 weist ferner zwei Düsenöffnungen 76, 78 auf. Die Düsenöffnungen 76, 78 öffnen ein Waschwassersystem zu einer Umgebung hin. Die Waschwasserdüse 10 ist aus einem Kunststoff hergestellt.

In einem montierten Zustand ist die Befestigungslasche 14 innerhalb einer nicht näher gezeigten Aussparung der Waschwasserdüse 10 angeordnet. Die Waschwasserdüse 10 weist zwei Führungsprofile 86, 88 auf. Die Führungsprofile 86, 88 umgreifen in einem montierten Zustand die Führungsflächen 58, 60 der Befestigungslasche 14. Die Führungsprofile 86, 88 bilden jeweils eine Führungsnut aus. Vorzugsweise klemmen die Führungsprofile 86, 88 die Befestigungslasche 14 kraftschlüssig fest. Die Anbindungsmittel 80, 82 sind in einem montierten Zustand von dem Flansch 22 verdeckt. Die Anbindungsmittel 80, 82 sind im montierten Zustand innerhalb des U-förmigen Profils des Gelenkteils 12 angeordnet. Der Waschwasserschlauch 84 verläuft im montierten Zustand innerhalb des U-förmigen Profils des Gelenkteils 12.

## Patentansprüche

1. Wischarmvorrichtung mit einer Waschwasserdüse (10) und mit einem Gelenkteil (12), das zumindest eine Befestigungslasche (14) aufweist, die zu einer Befestigung der Waschwasserdüse (10) an dem Gelenkteil (12) vorgesehen ist, wobei eine Rasteinheit (16), die dazu vorgesehen ist, eine Rastverbindung zwischen der zumindest einen Befestigungslasche (14) und der Waschwasserdüse (10) herzustellen, zumindest eine Rastausnehmung (18) umfasst, die in der zumindest einen Befestigungslasche (14) zur Aufnahme eines Rastmittels (20) angeordnet ist, **dadurch gekennzeichnet, dass** die zumindest eine Rastausnehmung (18) einen zumindest im Wesentlichen kreisrunden Querschnitt aufweist.

2. Wischarmvorrichtung nach Anspruch 1, **dadurch gekennzeichnet, dass** die Waschwasserdüse (10) das zumindest eine Rastmittel (20) umfasst, das dazu vorgesehen ist, bei einer Montage in die zumindest eine Rastausnehmung (18) der Befestigungslasche (14) einzurasten.

3. Wischarmvorrichtung nach einem der vorhergehenden Ansprüche, **dadurch gekennzeichnet, dass**
das Gelenkteil (12) einen Flansch (22) aufweist, an dem die zumindest eine Befestigungslasche (14) angeordnet ist.

4. Wischarmvorrichtung nach einem der vorhergehenden Ansprüche, **dadurch gekennzeichnet, dass** die zumindest eine Befestigungslasche (14) einstückig mit dem Gelenkteil (12) ausgebildet ist.

5. Wischarmvorrichtung nach einem der vorhergehenden Ansprüche, **dadurch gekennzeichnet, dass** die zumindest eine Befestigungslasche (14) eine zumindest im Wesentlichen rechteckige Form aufweist.

6. Wischarmvorrichtung nach einem der vorhergehenden Ansprüche, **dadurch gekennzeichnet, dass** die zumindest eine Befestigungslasche (14) zu einem Aufnahmeende (24) hin verjüngt ausgebildet ist.

7. Wischarmvorrichtung nach einem der vorhergehenden Ansprüche, **dadurch gekennzeichnet, dass** die zumindest eine Befestigungslasche (14) in einem Wischblattinnenkreisbereich (26) des Gelenkteils (12) angeordnet ist.

## Claims

1. Wiper arm apparatus having a wiping water nozzle (10) and having a hinged part (12) which has at least one fastening clip (14) which is provided for fastening the wiping water nozzle (10) to the hinged part (12), a latching unit (16) which is provided to establish a latching connection between the at least one fastening clip (14) and the wiping water nozzle (10) comprising at least one latching recess (18) which is arranged in the at least one fastening clip (14) for receiving a latching means (20), **characterized in that** the at least one latching recess (18) has an at least substantially circular cross section.

2. Wiper arm apparatus according to Claim 1, **characterized in that** the wiping water nozzle (10) comprises the at least one latching means (20) which is provided to latch into the at least one latching recess (18) of the fastening clip (14) during assembly.

3. Wiper arm apparatus according to either of the preceding claims, **characterized in that** the hinged part (12) has a flange (22), on which the at least one fastening clip (14) is arranged.

4. Wiper arm apparatus according to one of the preceding claims, **characterized in that** the at least one fastening clip (14) is formed in one piece with the hinged part (12).

5. Wiper arm apparatus according to one of the preceding claims, **characterized in that** the at least one fastening clip (14) has an at least substantially rectangular shape.

6. Wiper arm apparatus according to one of the preceding claims, **characterized in that** the at least one fastening clip (14) is configured so as to taper towards a receiving end (24).

7. Wiper arm apparatus according to one of the preceding claims, **characterized in that** the at least one fastening clip (14) is arranged in a wiper blade inner circular region (26) of the hinged part (12).

## Revendications

1. Dispositif de bras d'essuie-glace comportant une buse d'eau de lavage (10) et une partie d'articulation (12) qui comprend au moins une patte de fixation (14) qui est destinée à fixer la buse d'eau de lavage (10) à la partie d'articulation (12), une unité d'encliquetage (16), qui est destinée à réaliser une liaison par encliquetage entre ladite au moins une patte de fixation (14) et la buse d'eau de lavage (10), comportant au moins un évidement d'encliquetage (18) qui est disposé dans ladite au moins une patte de fixation (14) pour recevoir un moyen d'encliquetage (20), **caractérisé en ce que** ledit au moins un évidement d'encliquetage (18) présente une section transversale au moins sensiblement ronde.

2. Dispositif de bras d'essuie-glace selon la revendication 1, **caractérisé en ce que** la buse d'eau de lavage (10) comporte ledit au moins un moyen d'encliquetage (20) qui est, lors d'un montage, destiné à s'encliqueter dans ledit au moins un évidement d'encliquetage (18) de la patte de fixation (14).

3. Dispositif de bras d'essuie-glace selon l'une quelconque des revendications précédentes, **caractérisé en ce que** la partie d'articulation (12) comprend une bride (22) sur laquelle ladite au moins une patte de fixation (14) est disposée.

4. Dispositif de bras d'essuie-glace selon l'une quelconque des revendications précédentes, **caractérisé en ce que** ladite au moins une patte de fixation (14) est réalisée d'un seul tenant avec la partie d'articulation (12).

5. Dispositif de bras d'essuie-glace selon l'une quelconque des revendications précédentes, **caractérisé en ce que** ladite au moins une patte de fixation (14) présente une forme au moins sensiblement rectangulaire.

6. Dispositif de bras d'essuie-glace selon l'une quelconque des revendications précédentes, **caractérisé en ce que** ladite au moins une patte de fixation (14) est réalisée de manière à se rétrécir en direction d'une extrémité de réception (24).

7. Dispositif de bras d'essuie-glace selon l'une quelconque des revendications précédentes, **caractérisé en ce que** ladite au moins une patte de fixation (14) est disposée dans une zone circulaire intérieure de balai d'essuie-glace (26) de la partie d'articulation (12).
